# EUROPÄISCHE PATENTSCHRIFT

(11) **EP 1 595 480 B1**
(45) Veröffentlichungstag und Bekanntmachung des Hinweises auf die Patenterteilung: **03.10.2007**
(21) Anmeldenummer: 05009804.5
(22) Anmeldetag: 04.05.2005
(51) Int. Cl.: A47J 31/40

(54) **Kaffeemaschinenautomat**
Automated coffee machine
Machine à café automatique

(30) Priorität: 14.05.2004 DE 102004023964
(43) Veröffentlichungstag der Anmeldung: 16.11.2005
(73) Patentinhaber: HGZ Maschinenbau AG, CH-8108 Dällikon - ZH (CH)
(72) Erfinder: Sager, Peter, 8113 Boppelsen (CH)
(74) Vertreter: Rehberg Hüppe + Partner

(56) Entgegenhaltungen:
- EP-A- 0 641 536
- DE-A1- 4 133 697

## Beschreibung

Die Erfindung bezieht sich auf einen Kaffeemaschinenautomaten, insbesondere für Einzeltassen- und Kännchenfertigung, mit mindestens einer Einrichtung zur Zufuhr von Kaffeepulver, mit einer Brühvorrichtung, die einen aus einem stationär mit vertikaler Achse angeordneten Rohrabschnitt sowie zwei Verschlussstücken gebildeten Brühraum aufweist, mit einem kombinierten Axial- und Schwenkantrieb mit einem Motor, einem nachgeschalteten Getriebe und einer axial beweglichen und drehbaren Schwenksäule für die Bewegung des oberen, fest an einem Dreharm angeordneten Verschlussstücks in eine Brühstellung in den Rohrabschnitt hinein und aus diesem heraus, für die Bewegung des oberen Verschlussstücks in eine Parkstellung außerhalb der Achse des Rohrabschnitts und in eine Bereitschaftsstellung in der Achse des Rohrabschnitts, mit einem einen weiteren Motor, ein weiteres nachgeschaltetes Getriebe und eine axial bewegliche Spindel aufweisenden Vertikalantrieb für das untere Verschlussstück, und mit einem angetriebenen Schwenkabstreifer für die Abfuhr der Tablette aus Kaffeepulver. Der Kaffeemaschinenautomat weist in der Regel auch einen verschwenkbaren Trichter zum erleichterten Einbringen des Kaffeepulvers in den Brühraum auf.

Unter einem Kaffeemaschinenautomaten wird eine Maschine verstanden, bei der die Vorgänge des Mahlens des Kaffeepulvers, des Einbringens des Kaffeepulvers in den Brühraum, der Brühvorgang selbst und der Ausstoß des ausgelaugten Kaffeepulvers in Form des Ausschiebens der ausgelaugten und ausgepressten Tablette von Kaffeepulver automatisch erfolgen, ohne dass einer dieser oder weiterer Verfahrensschritte manuell ausgelöst oder unterstützt werden müssten. Es versteht sich aber, dass der Kaffeemaschinenautomat zur Durchführung eines Zyklusses durch Drücken eines Schalters o. ä. in Gang gesetzt werden muss. Die Erfindung ist auch auf einen Mengenfrischbrühautomaten anwendbar.

### STAND DER TECHNIK

Ein Kaffeemaschinenautomat der eingangs beschriebenen Art ist aus der EP 0 641 536 B1 bekannt. Der Kaffeemaschinenautomat weist eine Brühvorrichtung auf, die einen Brühraum besitzt, der aus einem stationär mit vertikaler Achse angeordneten Rohrabschnitt - auch Brührohr genannt - sowie zwei Verschlussstücken gebildet ist. Es ist ein Axialantrieb für die Bewegung des oberen Verschlussstücks an einem Dreharm in den Rohrabschnitt hinein und aus diesem heraus vorgesehen. Ein Schwenkantrieb dient der Bewegung des oberen Verschlussstückes in eine Parkstellung außerhalb der Achse des Rohrabschnitts und in eine Bereitschaftsstellung in der Achse des Rohrabschnitts. Der Axial- und der Schwenkantrieb für das obere Verschlussstück sind miteinander kombiniert. Der kombinierte Axial- und Schwenkantrieb weist ein einem Motor nachgeschaltetes Schneckengetriebe und eine axial bewegliche und drehbare Schwenksäule für die Bewegung des oberen, fest an dem Dreharm angeordneten Verschlussstücks in eine Brühstellung in den Rohrabschnitt hinein und aus diesem heraus, für die Bewegung des oberen Verschlussstücks in die Parkstellung außerhalb der Achse des Rohrabschnitts und in die Bereitschaftsstellung in der Achse des Rohrabschnitts auf. Das obere Verschlussstück ist fest mit dem Dreharm verbunden. Für den kombinierten Axial- und Schwenkantrieb des Dreharms mit dem oberen Verschlussstück sowie dem Trichter und dem Schwenkabstreifer ist nur der einzige Motor mit dem Schneckengetriebe und einem nachgeschalteten Verteilergetriebe vorgesehen. Das Schneckengetriebe sitzt auf einer Spindel der Schwenksäule. Das Verteilergetriebe ist oberhalb des Schneckengetriebes angeordnet und weist eine die Schwenksäule umgebende Führungsbuchse, eine die Führungsbuchse umgebende Nutbuchse, einen Bolzen und einen Gleitstein auf. Die Nutbuchse ist ortsfest im Gehäuse gelagert und weist zu diesem Zweck eine Bohrung auf, in die der Bolzen eingreift, der radial von außen nach innen in das Gehäuse eingeschraubt ist. Der Bolzen durchsetzt auch die Führungsbuchse im Bereich eines sich radial über einen Teil des Umfangs erstreckenden Schlitz. Damit ist die Führungsbuchse an einer Axialbewegung gehindert, während eine Verschwenkung relativ zu der Nutbuchse ermöglicht ist. Die ortsfeste Nutbuchse ist mit einer Gleitbahn versehen. Die Gleitbahn weist an ihrem unteren Ende einen achsparallelen Anfangsbereich auf, an den sich ein gewindeartig ansteigender Bereich anschließt. Die Führungsbuchse weist ebenfalls eine Gleitbahn auf, die achsparallel verläuft. Mit den beiden Gleitbahnen in der Nutbuchse und in der Führungsbuchse arbeitet der Gleitstein zusammen, der in die Schwenksäule eingeschraubt ist. Dieses so aufgebaute Verteilergetriebe besitzt eine relativ große Anzahl von Einzelteilen und ist in Herstellung und Montage aufwendig und teuer. Der bekannte Kaffeemaschinenautomat sieht also bereits einen kombinierten Axial- und Schwenkantrieb für das obere Verschlussstück und einen davon getrennten separaten Vertikalantrieb für das untere Verschlussstück vor, damit einerseits die beiden Verschlussstücke relativ zum Rohrabschnitt des Brühraums unabhängig voneinander bewegt werden können, um vorteilhaft das Vorpressen, Entlasten und Anheben der Tablette aus Kaffeepulver durchführen zu können. Für das obere Verschlussstück entsteht kein Nachteil in den einzelnen Phasen des Brühzyklus. Sämtliche Hub- und Schwenkbewegungen des oberen Verschlussstückes werden von diesem einen kombinierten Antrieb mit Hilfe des Verteilergetriebes abgeleitet. Die einzelnen Bewegungen können sehr genau und reproduzierbar festgelegt werden. Damit wird die Steuereinheit entlastet. Einige Bewegungen werden über das Verteilergetriebe mechanisch zwangsweise gekoppelt, wodurch nicht nur die Steuereinheit vereinfacht wird, sondern darüberhinaus vorteilhaft die Betriebssicherheit erhöht wird. Mit dem Verteilergetriebe lassen sich die einzelnen Bewegungen des oberen Verschlussstückes und des Schwenkabstreifers von einem Antrieb ableiten und aufeinander abstimmen. Es sind weniger Sensoren erforderlich, und die mechanische Zwangskupplung der Bewegungen erweist sich als vorteilhaft. Die Abstreiferwirkung wird mit der Öffnungsbewegung gekoppelt, also dem Verschwenken von der Bereitschaftsstellung in die Parkstellung. Es ist nicht erforderlich, einen Kaffeezubringer zu realisieren und anzutreiben. Dadurch, dass die Parkstellung außerhalb der Achse des Brühraums erreicht wird, wird der Brühraum von oben frei zugänglich. Damit ist es möglich, mindestens eine Einrichtung zur Zufuhr von Kaffeepulver ortsfest so vorzusehen, dass direkt in den Brühraum hinein gemahlen werden kann. Durch die Aufteilung der Bewegung des oberen Verschlussstückes in eine axiale Strecke zwischen Brühstellung und Bereitschaftsstellung und eine gewindeartig steigende Strecke zwischen Bereitschaftsstellung und Parkstellung wird es möglich, bis zu drei Einrichtungen zur Zufuhr von Kaffeepulver oder sogar noch mehr stationär anzuordnen, so dass wahlweise unterschiedliche Kaffeesorten oder Kaffeebohnenzubereitungen wahlweise gemahlen werden können, wie dies für Normalkaffee, Cappuccino, Mokka und dergleichen erforderlich ist.

Es ist weiterhin ein Vertikalantrieb für das untere Verschlussstück vorgesehen, der außer einem weiteren Motor ein nachgeschaltetes weiteres Schneckengetriebe und eine axial geführte Spindel aufweist. Die Spindel trägt das untere Verschlussstück des Brühraums. Das weitere Schneckengetriebe ist unterhalb des unteren Verschlussstücks angeordnet. Wenn die Dichtung des unteren Verschlussstücks des Brühraums defekt wird, besteht die Gefahr, dass eine Mischung aus Kaffee und Kaffeepulver in das Schneckengetriebe und sogar weiter in den Motor des Vertikalantriebs gelangt. Auch das Schneckengetriebe und der Motor des kombinierten Axial- und Schwenkantriebes können beschädigt werden, weil die beiden Schneckenantriebe und die beiden Motoren eine von einem gemeinsamen Gehäuse umschlossene Einheit bilden.

Ein weiterer Kaffeemaschinenautomat ist aus der DE-OS 41 33 697 bekannt. Das obere Verschlussstück der Brühvorrichtung ist an einem Dreharm angeordnet, der um ein ortsfestes Lager schwenkbar ist. Das obere Verschlussstück ist mit dem Dreharm aus einer Bereitschaftsstellung in der Achse des Rohrabschnittes oberhalb des Brühraums in eine Parkstellung außerhalb der Achse des Rohrabschnittes verschwenkbar, wobei für diese Verschwenkung ein Schwenkantrieb in Form eines Elektromotors mit nachgeschaltetem Schneckengetriebe vorgesehen ist. Auf dem Dreharm ist weiterhin ein Axialantrieb angeordnet, mit dessen Hilfe das obere Verschlussstück zum Erreichen der Brühstellung aus der Bereitschaftsstellung heraus in den Rohrabschnitt dichtend einfahrbar ist. Außerdem weist der bekannte Kaffeemaschinenautomat einen Vertikalantrieb für das untere Verschlussstück auf. Somit sind bei diesem bekannten Kaffeemaschinenautomaten drei Antriebe für die Bewegung der beiden Verschlussstücke vorgesehen. Durch die Lagerung des Dreharms um ein ortsfestes Lager ist es möglich, das obere Verschlussstück des Brühraums ausgehend von der Parkstellung in die Bereitschaftsstellung und die anschließende Brühstellung mit der erforderlichen Genauigkeit zu positionieren und zu führen, ohne dass das obere Verschlussstück zweiteilig ausgebildet werden müsste. Weiterhin weist der bekannte Kaffeemaschinenautomat einen Schwenkabstreifer für die Abfuhr der Tablette aus Kaffeepulver auf. Dieser Schwenkabstreifer ist an dem Dreharm befestigt. Die Abfuhr der ausgelaugten Tablette aus Kaffeepulver erfolgt durch einen Schwenkvorgang des Dreharms um sein festes Lager, deren Schwenkrichtung mit dem Anfahren der Bereitschaftsstellung aus der Parkstellung heraus übereinstimmt. Demzufolge ist es erforderlich, innerhalb eines Brühzyklus den Dreharm zweimal hin- und herzuschwenken. Der eine Hin- und Herschwenkvorgang dient der Durchführung des Brühvorganges. Der anderen Hin- und Herschwenkvorgang dient der Abfuhr der ausgelaugten Tablette. In der Parkstellung muss die Tablette abgeführt sein, und das obere Verschlussstück darf sich nicht oberhalb des Brühraums befinden. Die zu dem Kaffeemaschinenautomaten gehörende Steuereinrichtung muss dies entsprechend berücksichtigen.

### AUFGABE DER ERFINDUNG

Der Erfindung liegt die Aufgabe zugrunde, den baulichen Aufwand eines Kaffeemaschinenautomaten der eingangs beschriebenen Art zu reduzieren, insbesondere hinsichtlich des Verteilergetriebes und/oder der Antriebe, und gleichzeitig den Brühzyklus zu vereinfachen, ohne auf die Vorteile des Vorverdichtens, Entlastens und Ausschiebens sowie der Abfuhr der Tablette aus Kaffeepulver verzichten zu müssen.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Gleitbahn mit dem achsparallelen Anfangsbereich für das Überführen des oberen Verschlussstücks aus der Brühstellung in die Bereitschaftsstellung und dem gewindeartig steigenden Bereich für das Verschwenken des Dreharms mit dem oberen Verschlussstück aus der Bereitschaftsstellung in die Parkstellung ist nicht mehr an der Nutbuchse sondern an der Schwenksäule des kombinierten Axial- und Schwenkantriebs des Dreharms vorgesehen. In Verbindung damit ist es nur noch erforderlich, dass der in die Gleitbahn eingreifende Gleitstein ortsfest am Gehäuse vorgesehen ist. Die Nutbuchse und der die Nutbuchse und die Führungsbuchse durchsetzende Bolzen kommen in Fortfall. Auch die Führungsbuchse muss nicht mehr radial zwischen Schwenksäule und Nutbuchse untergebracht werden. Die Führungsbuchse kann in einen axial versetzt anzuordnenden Führungsring schrumpfen. Trotzdem kann die Schwenkbewegung des Trichters und des Schwenkabstreifers von dem Führungsring abgeleitet werden. Zu diesem Zweck ist der Führungsring axial gegenüber der Gleitbahn und dem Gleitstein versetzt und zweckmäßig oberhalb dieser Elemente die Schwenksäule umschließend angeordnet. Der Führungsring ist mit der Schwenksäule drehfest, aber axial verschiebbar verbunden, so dass der Führungsring mit dem daran sitzenden Schwenkabstreifer und Trichter bei einer rein axialen Bewegung der Schwenksäule keine Bewegung durchführt, jedoch der Schwenksäule bei einer Drehbewegung folgt. Das Verteilergetriebe insgesamt weist so eine verringerte Anzahl von Einzelteilen auf und ist damit preiswert in der Herstellung und Montage. Das Verteilergetriebe besitzt vorteilhaft einen verringerten Durchmesser und einen reduzierten Bauraum.

Die Erfindung kann auch in Verbindung mit einem Durchlauferhitzer angewendet werden, d.h. es besteht die Möglichkeit, insbesondere den Brühraum mit einem Durchlauferhitzer zu umgeben, um eine schnelle Betriebsbereitschaft des Kaffeemaschinenautomaten sicherzustellen. Beide Motoren können unterhalb des Durchlauferhitzers angeordnet sein, also an einer Stelle, die thermisch nicht so hoch beansprucht ist. Das Gehäuse des Durchlauferhitzers kann zugleich auch das Gehäuse des Brühraums und das Gehäuse des Verteilergetriebes bilden, so dass die gesonderte Anordnung von Gehäusen entfällt. Außerdem nimmt dieses gemeinsame Gehäuse den Rohrabschnitt des Brühraumes auf. Es gibt damit nur ein großes aus einem zusammenhängenden Stück gebildetes Gehäuse, dessen relativ genaue Bearbeitung keine Probleme mit sich bringt. Andererseits wird damit gleichsam automatisch auch die Genauigkeit erreicht, die für das Positionieren der Teile zueinander erforderlich ist. Insbesondere liegt der Abstand der Achse des Brühraums zu der Achse des Verteilergetriebes fest.

Für den kombinierten Axial- und Schwenkantrieb des Dreharms mit dem oberen Verschlussstück sowie den angetriebenen Schwenkabstreifer sollte ein erster Motor mit seiner Achse unabhängig von dem Vertikalantrieb für das untere Verschlussstück, insbesondere oberhalb eines ersten Übersetzungsgetriebes, parallel und beabstandet zu der Achse des Dreharms, vorgesehen sein. Die Unabhängigkeit bezieht sich auf die Verwirklichung von separaten Einheiten aus je einem Motor und je einem Übersetzungsgetriebe für den kombinierten Axial- und Schwenkantrieb einerseits und den Vertikalantrieb andererseits. Ein gemeinsames Gehäuse oder eine gemeinsame Auflagerung wird bewusst vermieden. Der jeweilige Motor ist höher angeordnet als das zugehörige Übersetzungsgetriebe, so dass auch bei defekter Dichtung am unteren Verschlussstück des Brühraums eine Mischung aus Kaffee und Kaffeepulver den Motor nicht beeinträchtigen kann. Tritt trotzdem ein Defekt auf, können die einzelnen Elemente der beiden Einheiten unabhängig voneinander kostengünstig ausgetauscht oder repariert werden.

Für den Vertikalantrieb des untere Verschlussstücks ist also ein zweiter Motor unabhängig von dem ersten Motor, insbesondere mit seiner Achse oberhalb eines zweiten Übersetzungsgetriebes, parallel und beabstandet zu der Achse des Brühraums, vorgesehen.

Beide Motoren sind auf je einer Konsole gelagert. Auf ein gemeinsames Gehäuse wird bewusst verzichtet. Die einzelnen Elemente der Antriebe sind servicefreundlich, also gut zugänglich und sichtbar, untergebracht. Der unabhängigen Ausbildung und Anordnung der separaten Einheiten aus je einem Motor und je einem nachgeschalteten Übersetzungsgetriebes für den kombinierten Axial- und Schwenkantrieb einerseits und den Vertikalantrieb andererseits kommt auch selbständige erfinderische Bedeutung zu, d. h. sie können in Verbindung mit der Ausbildung des Verteilergetriebes, aber auch unabhängig davon verwirklicht werden.

Das Verteilergetriebe kann so ausgebildet sein, dass während des Bewegens des oberen Verschlussstückes aus der Bereitschaftsstellung in die Parkstellung auch der Schwenkabstreifer die Tablette aus Kaffeepulver abführt. Dabei ist der Schwenkabstreifer nicht mit dem Dreharm verbunden, sondern separat gelagert, so dass seine Bewegung gesondert abgenommen werden kann. Freilich ist die Bewegung des oberen Verschlussstückes einerseits und des Schwenkabstreifers andererseits aufeinander abgestimmt und über das Verteilergetriebe gekoppelt. Diese Kopplung ist so durchgeführt, dass die Richtung der Abstreifbewegung mit der Richtung des Verschwenkens des oberen Verschlussstückes aus der Bereitschaftsstellung in die Parkstellung übereinstimmt. Damit ergibt sich der besondere Vorteil, dass innerhalb eines Brühzyklus nur ein einziger Hin- und Herschwenkvorgang erforderlich ist. Der Brühzyklus wird damit schneller durchführbar und einfacher beherrschbar.

Das dem ersten Motor und/oder dem zweiten Motor nachgeordnete Übersetzungsgetriebe kann vorteilhaft einen Zahnriemen, einen Keilriemen oder eine Zahnradstufe aufweisen. Jedenfalls sollte zumindest das Übersetzungsgetriebe für den Vertikalantrieb für Kaffee und Kaffeepulver durchlässig ausgebildet sein. Auch eine Kegelradstufe ist an dieser Stelle denkbar. Aus Vereinfachungsgründen werden beide Übersetzungsgetriebe mit übereinstimmenden Elementen ausgebildet. Hierzu gehört vorteilhaft je eine Mutter, die drehbar, aber axial unverschieblich gelagert ist. Die Mutter besitzt ein Innengewinde, welches mit einem Außengewinde auf der Spindel des Vertikalantriebes bzw. auf der Schwenksäule des kombinierten Axial- und Schwenkantriebes zusammenarbeitet. Am äußeren Umfang der Mutter greift z. B. der Zahnriemen an.

Im oberen Bereich der Schwenksäule sollte ein Führungsring drehbar, aber axial unverschieblich gelagert sein, der mit der Schwenksäule drehfest, aber axial verschieblich gekoppelt ist. Der Schwenkabstreifer für die Abfuhr der Tablette aus Kaffeepulver und/oder der Trichter für das Einbringen des Kaffeepulvers in den Brühraum sind mit dem Führungsring drehfest verbunden. Der Führungsring besitzt nur eine geringe axiale Erstreckung und beansprucht demzufolge einen kleinen Bauraum. Trotzdem erfüllt er alle notwendigen Funktionen bezüglich der Verschwenkbarkeit des Schwenkabstreifers und des Trichters. Zwischen der Schwenksäule und dem Führungsring ist eine Unrundverbindung vorgesehen. Diese kann aus einer axial durchgehenden Abflachung an der Schwenksäule und einem Gegenvorsprung an dem Führungsring bestehen. Aber auch andere Unrundverbindungen, mit und ohne Spiel, sind denkbar. Damit können verschiedene Überdeckungen mit der Schwenkbewegung des Dreharms erreicht werden.

Die Gleitbahn in der Nutbuchse weist einen achsparallelen Anfangsbereich für das Überführen des oberen Verschlussstückes aus der Brühstellung in die Bereitschaftsstellung und umgekehrt auf. Innerhalb dieses achsparallelen Anfangsbereiches wird eine Drehbewegung der Schwenksäule verhindert und eine achsparallele Hubbewegung sichergestellt. Dies muss zumindest in dem Bereich geschehen, in dem sich das obere Verschlussstück in dem Rohrabschnitt des Brühraumes befindet. Ein sanfter Übergang zwischen diesem Bereich und dem gewindeartig steigenden Bereich ist sinnvoll. Der gewindeartig steigende Bereich versetzt den Dreharm mit dem fest daran angeordneten oberen Verschlussstück in eine Schwenkbewegung aus der Bereitschaftsstellung in die Parkstellung und umgekehrt. Dabei entfernt sich einerseits das obere Verschlussstück von der Achse des Rohrabschnittes, so dass der Raum oberhalb des Rohrabschnittes frei wird. Andererseits ist die Bereitschaftsstellung auf vergleichsweise niedererer Höhenlage angeordnet als die Parkstellung, so dass Auslaufschurren von Kaffeemühlen oberhalb des Rohrabschnittes in der Bereitschaftsstellung ohne weiteres unterfahren werden können. Gleichzeitig ist das relative Anheben des oberen Verschlussstückes in die Parkstellung hinein insofern vorteilhaft, als damit eine Duschposition zur Säuberung des oberen Verschlussstückes durch das Ausspritzen einer entsprechenden Menge Wassers möglich wird. Dieses Duschwasser kann über einen Ablauf abgeführt werden und gelangt damit nicht in den Brühraum. Der Schwenkabstreifer ist hinter dem oberen Verschlussstück angeordnet, d. h. er folgt bei dem Verschwenken des oberen Verschlussstückes aus der Bereitschaftsstellung in die Parkstellung diesem nach. Dies erbringt den Vorteil, dass der Raum, in den die ausgelaugte Tablette angehoben wird, frei von dem oberen Verschlussstück ist und der Schwenkabstreifer seine Wirkung erbringen kann. Der Schwenkabstreifer ist zweckmäßig etwa halbkreisförmig gekrümmt ausgebildet, wobei die konkave Seite dem oberen Verschlussstück zugeordnet ist. Damit ist es möglich, beim Überführen des oberen Verschlussstückes von der Bereitschaftsstellung in die Parkstellung zugleich auch den Schwenkabstreifer zum Abführen der Tablette zu nutzen, ohne dass dies den Brühzyklus komplizierter macht. Die Unrundverbindung zwischen dem Führungsring und der Schwenksäule kann zweckmäßig achsparallel angeordnet sein. Sie verläuft damit geradlinig und ist einfach herstellbar. Die Drehbewegung wird von dem gewindeartig steigenden Bereich der Gleitbahn in der Schwenksäule abgenommen.

Der Dreharm ist auf der dem oberen Verschlussstück abgekehrten Seite über die Schwenksäule hinaus verlängert und weist einen Anschlag auf. Am Gehäuse ist ein dem Anschlag zugeordneter Gegenanschlag vorgesehen, an dem sich der Anschlag des Dreharms in der Brühstellung des oberen Verschlussstücks abstützt. Der Anschlag oder der Gegenanschlag können einstellbar ausgebildet sein, so dass damit die Position des oberen Verschlussstückes in der Brühstellung festgelegt wird. Wenn während des Brühvorganges im Brühraum Druck auf das obere Verschlussstück einwirkt, kann eine entsprechende Gegenkraft zwischen Anschlag und Gegenanschlag aufgenommen werden, so dass letztendlich die Schwenksäule frei von einer Biegebeanspruchung gehalten wird. Dies kommt ihrer Lagerung, Betriebssicherheit und Langlebigkeit zugute. Der Führungsring kann zugleich das Lager für die Schwenksäule bilden.

Der Schwenkabstreifer ist mit dem Führungsring drehfest verbunden, insbesondere verschraubt, damit jede Verdrehung des Führungsrings auf den Schwenkabstreifer entsprechend übertragen wird. Der Führungsring ist an einer Axialbewegung gehindert und kann sich damit nur an Ort und Stelle verdrehen, und zwar entsprechend dem Zusammenspiel mit der Schwenksäule.

Der erste und der zweite Motor für den Antrieb der Schwenksäule bzw. des unteren Verschlussstücks können Elektromotoren, insbesondere Gleichstrommotoren, sein. Zwischen dem ersten Motor und dem Verteilergetriebe kann eine Mutter/Spindel-Einheit vorgesehen sein, wobei die Spindel mit der Schwenksäule drehfest verbunden ist. Die Mutter ist zwar drehbar gelagert, jedoch an einer Axialbewegung gehindert, so dass bei einem Verdrehen der Mutter an Ort und Stelle die Schwenksäule eine hubartige Bewegung ausführt. Andererseits könnte der Motor für den Antrieb auch beispielsweise als Hydromotor ausgebildet sein. Es empfiehlt sich jedoch die Anwendung eines Elektromotors mit der Möglichkeit seiner genauen und reproduzierbaren Steuerung. Dies gilt auch für den zweiten Motor des Vertikalantriebes.

Der Motor für die Bewegung des unteren Verschlussstückes kann also auch ein Elektromotor, insbesondere ein Gleichstrommotor, sein. Beide Antriebe bzw. Motoren können ähnlich oder sogar übereinstimmend ausgebildet sein.

### KURZBESCHREIBUNG DER FIGUREN

Im Folgenden wird die Erfindung anhand in den Figuren dargestellter bevorzugter Ausführungsbeispiele weiter erläutert und beschrieben. Dabei zeigt
- **Fig.1**: einen vertikalen Schnitt durch wesentliche Teile des Kaffeemaschinenautomaten,
- **Fig. 2**: eine Seitenansicht des Kaffeemaschinenautomaten gemäß Fig. 1,
- **Fig. 3**: eine Draufsicht auf den Kaffeemaschinenautomaten,
- **Fig. 4**: einen Schnitt gemäß der Linie IV-IV in Fig. 1.

### FIGURENBESCHREIBUNG

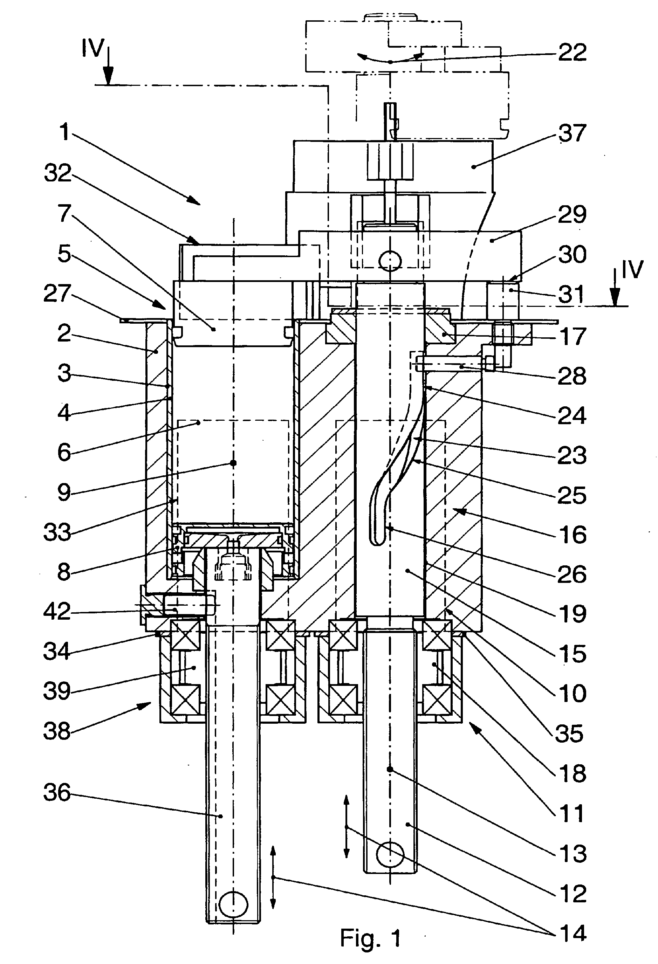

Der Kaffeemaschinenautomat 1 gemäß den Fig. 1 bis 4 weist ein gemeinsames Gehäuse 2 auf, welches in seinem Innern einen nicht näher dargestellten Durchlauferhitzer mit einem ebenfalls nicht verdeutlichten Heißwasserraum aufnehmen kann. Das Gehäuse 2 weist eine Bohrung 3 auf, in die ein Rohrabschnitt 4 dichtend eingesetzt ist, der ein wesentliches Element einer Brühvorrichtung 5 bildet. Ein Brühraum 6 der Brühvorrichtung 5 wird ansonsten noch von einem oberen Verschlussstück 7 und einem unteren Verschlussstück 8 begrenzt. Das obere Verschlussstück 7 ist in der Regel als Wasserkolben ausgebildet, d. h. von hier wird das Wasser während des Brühvorganges in den Brühraum 6 eingeleitet und durch das Kaffeepulver geschickt. Das untere Verschlussstück 8 ist in der Regel als Kaffeekolben ausgebildet, d. h. er dient als Träger für die Tablette aus Kaffeepulver. Grundsätzlich können die Verschlussstücke 7 und 8 aber auch in umgekehrter Weise genutzt bzw. getrieben werden. Das untere Verschlussstück 8 verbleibt immer im Rohrabschnitt 4 und wird nur axial hubartig entsprechend der vertikalen Achse 9 bewegt. Das obere Verschlussstück 7 hingegen wird aus dem Rohrabschnitt 4 in Richtung der Achse 9 ausgefahren und dann seitlich weggeschwenkt, damit die dann freie Öffnung des Rohrabschnittes 4 bzw. des Brühraums 6 ungehindert mit Kaffeepulver beschickt werden kann. Die beiden Verschlussstücke 7 und 8 sind kolbenartig ausgebildet und mit Dichtungen versehen, die der Übersichtlichkeit halber nicht dargestellt sind. Das untere Verschlussstück 8 ist mit einem Sieb für den Durchtritt des Kaffeegetränks versehen und mit dem Auslauf für das abzugebende Kaffeegetränk in bekannter Weise versehen.

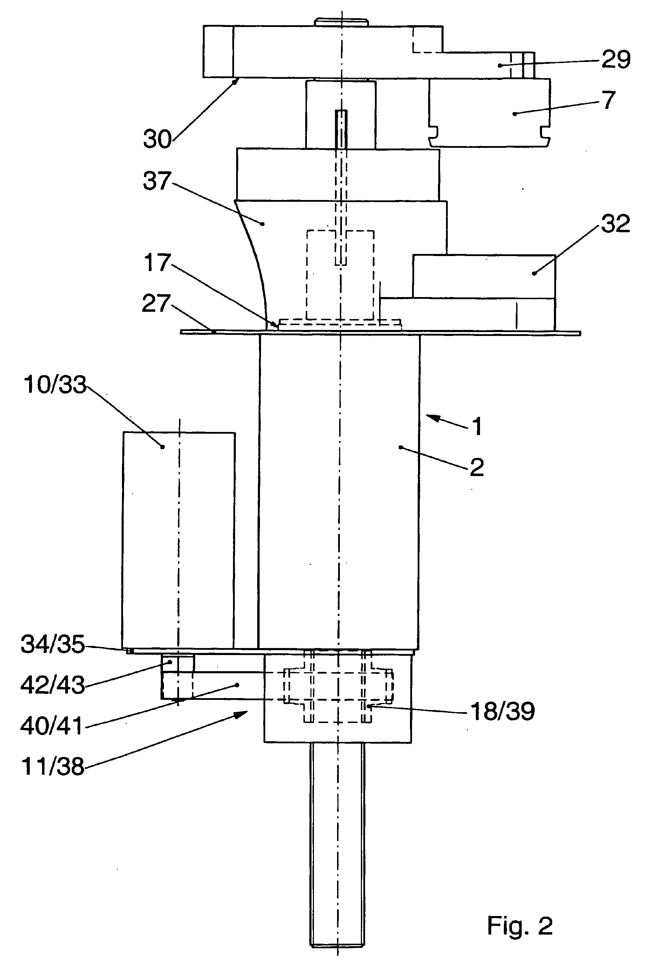

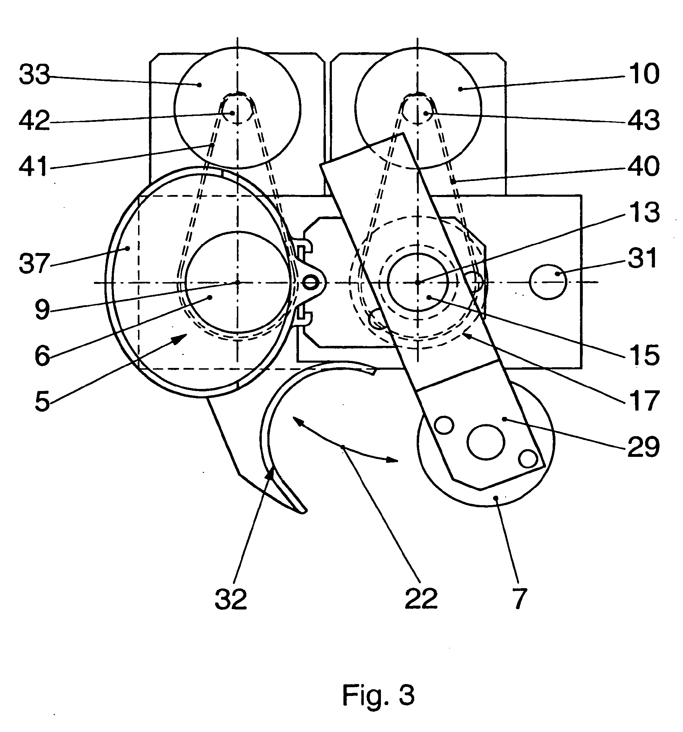

Für die Bewegungen des oberen Verschlussstücks 7 ist ein einziger erster Motor 10 vorgesehen, der oberhalb des unteren Endes des Gehäuses 2 angeordnet ist. Dem Motor 10 ist ein Übersetzungsgetriebe 11 (Fig. 2) nachgeschaltet. Bestandteil des Übersetzungsgetriebes 11 ist eine Mutter/Spindel-Einheit, deren Spindel 12 mit vertikaler Achse 13 vorgesehen ist. Die Achse 13 erstreckt sich parallel zur Achse 9 in entsprechendem Abstand. Die in Fig. 1 nicht näher dargestellte und in Fig. 2 angedeutete, zu der Spindel 12 gehörige Mutter 18 ist drehbar, aber axial unverschieblich gelagert, so dass bei einer Drehung der Mutter 18 die Spindel 12 eine reine Hubbewegung in Richtung der Achse 13 gemäß Doppelpfeil 14 ausführt. Die Spindel 12 ist mit einer Schwenksäule 15 eines Verteilergetriebes 16 drehfest verbunden. Das Verteilergetriebe 16 durchsetzt ebenfalls das Gehäuse 2 des Kaffeemaschinenautomaten 1. Die Fig. 1 und 3 lassen erkennen, wie sich das Gehäuse 2 seitlich so erstreckt, dass einerseits die Brühvorrichtung 5 und andererseits das Verteilergetriebe 16 aufgenommen wird. Das Verteilergetriebe 16 weist als wesentliches Element die Schwenksäule 15 auf. Die Schwenksäule 15 ist in einer Bohrung 19 im Gehäuse 2 gelagert. In die Bohrung 19 greift ein Gleitstein 28 ein, der radial von außen nach innen in das Gehäuse 2 eingeschraubt ist und so mit der Schwenksäule 15 zusammenarbeitet.

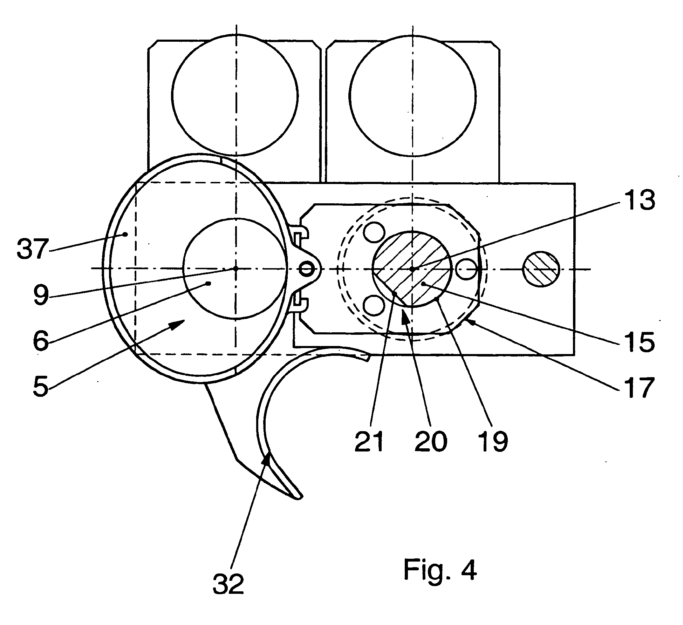

Im oberen Bereich der Bohrung 19 ist im Gehäuse 2 ein Führungsring 17 drehbar gelagert. Der Führungsring 17 weist eine Unrundverbindung 20 (Fig. 4) mit einer über den axialen Hub der Schwenksäule 15 durchgehenden Abflachung 21 auf, der ein Gegenvorsprung an der Führungsbuchse 17 zugeordnet ist. Ein Abdeckblech 27 hindert somit den Führungsring 17 an einer Axialbewegung gemäß Doppelpfeil 14, gestattet jedoch andererseits eine Relativverschwenkung gemäß Doppelpfeil 22 um die Achse 13.

In der Schwenksäule 15 ist eine Gleitbahn 23 vorgesehen, die in Fig. 1 deutlich erkennbar ist. Die Gleitbahn 23weist einen achsparallelen Anfangsbereich 24 an ihrem unteren Ende auf, an den sich mit entsprechendem Übergang ein gewindeartig steigender Bereich 25 anschließt. Am oberen Ende kann die Gleitbahn 23 wiederum einen achsparallelen Bereich 26 aufweisen. Da die Schwenksäule 15 ein montierbares Wellenteil darstellt, kann auch eine komplizierte Gestalt der Gleitbahn 23 leicht hergestellt werden. Mit der Gleitbahn 23 arbeitet der schon erwähnte Gleitstein 28 zusammen, der fest am Gehäuse 2 angeordnet ist und sich radial von außen nach innen in die Gleitbahn 23 hinein erstreckt. Die Schwenksäule 15 durchsetzt so nicht nur das Gehäuse 2 in vertikaler Richtung, sondern erstreckt sich nach oben über dieses hinaus. Mit der Schwenksäule 15 ist ein Dreharm 29 (Fig. 1 bis 3) drehfest verbunden, an dessen einem freien Ende das obere Verschlussstück 7 der Brühvorrichtung 5 fest gelagert ist. Der Dreharm 29 besitzt auf seiner dem oberen Verschlussstück 7 abgekehrten Seite einen Anschlag 30, der mit einem Gegenanschlag 31 am Gehäuse 2 zusammenarbeitet. Der Gegenanschlag 31 kann in Form einer einstellbaren Schraube gebildet sein, um die Brühstellung des oberen Verschlussstückes 7 festzulegen und eine Abstützung für das obere Verschlussstück 7 in der Brühstellung zu bilden.

Mit dem Führungsring 17 ist sowohl ein Schwenkabstreifer 32 wie auch ein Trichter 37 drehfest verbunden, die somit ebenso wie der Führungsring 17 eine reine Dreh- oder Schwenkbewegung um die Achse 13 gemäß Doppelpfeil 22 ausführen. In der Parkstellung erreicht der Trichter 37 eine Stellung über dem Brühraum 6 bzw. der Achse 9, so dass bei einem weiteren Brühzyklus Kaffeepulver von einer Mühle über eine Schurre und den Trichter 37 in den Brühraum 6 gelangen kann. In der Parkstellung steht das obere Verschlussstück 7 oberhalb eines ortsfest angeordneten Ablauftrichters, so dass durch einen Duschvorgang mit Heißwasser das obere Verschlussstück 7 gereinigt werden kann.

Hinsichtlich der Bewegung des oberen Verschlussstückes 7 werden drei Stellungen unterschieden, nämlich einmal die Brühstellung, bei der sich das obere Verschlussstück 7 eingefahren in den Rohrabschnitt 4 des Brühraums 6 befindet, wie dies in Fig. 1 in durchgezogener Linienführung dargestellt ist. In dieser Stellung läuft auch der Brühvorgang ab. Eine Bereitschaftsstellung ist die Stellung, in der sich das obere Verschlussstück 7 noch in der Achse 9, jedoch außerhalb des Rohrabschnittes 4 und über diesem befindet. Diese Stellung ist in keiner der Zeichnungen dargestellt. Schließlich ist eine Parkstellung des oberen Verschlussstückes 7 vorgesehen, die in Fig. 1 für das obere Verschlussstück 7 in gestrichelter Linienführung, in den Fig. 2 und 3 jedoch in durchgezogener Linienführung dargestellt ist. In dieser Parkstellung ist das obere Verschlussstück 7 einerseits aus der Achse 9 des Rohrabschnittes 4 gemäß Doppelpfeil 22 hinweggeschwenkt. Andererseits ist es in axialer Richtung angehoben, um beispielsweise unterhalb des Verschlussstückes 7 in der Parkstellung unter dem Verschlussstück 7 einen Ablauftrichter und eine Ablaufleitung für Spülwasser vorzusehen, um in dieser Parkstellung einen Dusch- und Reinigungsvorgang für das obere Verschlussstück 7 durchführen zu können. Die Parkstellung ist zugleich die Stellung, in der sich das obere Verschlussstück 7 zwischen zwei Brühzyklen befindet, d. h. jeder Brühzyklus beginnt und endet in der Parkstellung.

Auch für das untere Verschlussstück 8 ist ein Antrieb vorgesehen, der jedoch als reiner Hub-oder Vertikalantrieb gemäß Doppelpfeil 14 in der Achse 9 erfolgt. Der Vertikalantrieb weist einen weiteren Motor 33 auf, der ebenso wie der Motor 10 für das obere Verschlussstück 7 oberhalb des Gehäuses 2 und unabhängig von dem ersten Motor 10, beispielsweise auf je einer separaten Lagerplatte 34 bzw. 35 angeordnet ist. Die Motoren 10 und 33 können insbesondere als Elektromotoren, als Hydromotoren oder dergleichen ausgebildet sein. Es besteht die Möglichkeit, die Motoren 10 und 33 übereinstimmend auszubilden. Auch dem Motor 33 ist ein Übersetzungsgetriebe 38 nachgeschaltet. Über eine axial gesicherte, drehbar gelagerte Mutter 39 wird eine Spindel 36 gemäß Pfeil 14 rein axial in der Achse 9 angetrieben. Am oberen Ende der Spindel 36 ist das untere Verschlussstück 8 angeordnet. Das untere Verschlussstück 8 ist in Fig. 1 in seiner unteren Endstellung gezeigt. Es wird zum Erreichen der Brühstellung weiter nach oben in den Brühraum 6 eingefahren. Im Verlaufe eines Brühzyklusses kann das untere Verschlussstück 8 schließlich so weit nach oben in dem Rohrabschnitt 4 verfahren werden, dass seine obere Fläche mit der äußeren Abschlussebene des Gehäuses 2 auf der oberen Seite fluchtet.

Fig. 1 lässt den besonders einfachen Aufbau des Verteilergetriebes 16 erkennen. Das Verteilergetriebe 16 umfasst die in der Bohrung 19 gelagerte Schwenksäule 15 mit der Gleitbahn 23, den ortsfesten Gleitstein 28. Die Schwenksäule 15 weist weiterhin die durchgehende Abflachung 21 für die Mitnahme des Führungsrings 17 auf.

Aus der Zusammenschau der Fig. 1 bis 4 wird die Ausbildung und Anordnung der Antriebe erkennbar. Bereits Fig. 1 verdeutlicht, dass die beiden Motoren 10, 33 oberhalb der Muttern 18, 39 der Übersetzungsgetriebe 11, 38 angeordnet sind. Die Ritzel 42, 43 auf den Wellen der Motoren 10, 33 zeigen nach unten und sind über je einen Zahnriemen 40, 41 mit den Muttern 18, 39 in Verbindung. Da die Ausbildung an beiden Antrieben übereinstimmt, sind in Fig. 2 jeweils doppelte Bezugszeichen verwendet. Die Achsen der Motoren 10, 33 sind senkrecht und parallel sowie mit Abstand zu den Achsen 9 und 13 angeordnet. Bei einem Defekt der Dichtung des unteren Verschlussstücks 8 kann austretender Kaffee und Kaffeepulver durch das Übersetzungsgetriebe 38 hindurchtreten und nach unten abtropfen. Der Motor 33 bleibt von Kaffee und Kaffeepulver frei, ebenso der Motor 10 und dessen Übersetzungsgetriebe 11.

Ein Brühzyklus läuft wie folgt ab. Das obere Verschlussstück 7 befindet sich in der in Fig. 1 gestrichelt dargestellten Parkstellung (siehe auch Fig. 3). Das untere Verschlussstück 8 befindet sich in der in Fig. 1 dargestellten niedrigsten Stellung. Der Rohrabschnitt 4 des Brühraums 6 ist damit oben offen. Durch Starten eines Brühzyklus an einer hier nicht näher dargestellten Steuereinrichtung wird zunächst Kaffeepulver von einer nicht dargestellten Kaffeemühle frisch gemahlen. Es fällt über eine an der Mühle vorgesehene Schurre und den Trichter 37 in den Brühraum 6 und damit auf das untere Verschlussstück 8. Da der Dreharm 29 mit dem oberen Verschlussstück 7 in der Parkstellung über einen vergleichsweise großen Schwenkwinkel (Fig. 3) hinweggeschwenkt ist, besteht die Möglichkeit, oberhalb des Brühraums 6 bis zu drei Kaffeemühlen mit ihren Schurren enden zu lassen, um je nach der gewünschten Art des Kaffeegetränks unterschiedliche Kaffeebohnen in den Brühraum 6 hinein zu mahlen. Ist der Mahlvorgang beendet, so wird der Motor 10 in einer solchen Drehrichtung in Gang gesetzt, dass der Dreharm 29 mit dem oberen Verschlussstück 7 aus der Parkstellung in die Bereitschaftsstellung verschwenkt wird. Dies geschieht durch einen kombinierten Schwenk- und Senkvorgang im Uhrzeigersinn um die Achse 13 gemäß Doppelpfeil 22 (Fig. 3), wobei auch der Schwenkabstreifer 32 mit dem Trichter 37 hinweggeschwenkt werden. Obwohl die Spindel 12 und damit die Schwenksäule 15 über den Motor 10 nur rein in Richtung der Achse 13 abgesenkt werden, wird durch den gewindeartig fallenden Bereich 25 der Gleitbahn 23 über den Gleitstein 28 der Schwenksäule 15 eine Schwenkbewegung überlagert, die solange andauert, bis das Ende des Bereiches 25 an der Übergangsstelle zu dem achsparallelen Bereich 24 der Gleitbahn 23 erreicht ist. Das obere Verschlussstück 7 befindet sich damit mit seiner Achse fluchtend zur Achse 9, jedoch noch oberhalb und ausgefahren aus dem Rohrabschnitt 4. Mit dieser Bewegung ist auch dem Führungsring 17 und dem daran sitzenden Schwenkabstreifer 32 und dem Trichter 37 eine Rückbewegung erteilt worden. Es handelt sich hierbei um eine reine Drehbewegung in Uhrzeigerrichtung gemäß Doppelpfeil 22 (Fig. 3). Der Schwenkabstreifer 32 erfüllt dabei keine Funktion. Bei entsprechender Ausbildung kann diese Bewegung jedoch dazu genutzt werden, um versehentlich auf die Oberfläche des Gehäuses 2 im Bereich des Rohrabschnittes 4 aufgefallenes Kaffeepulver zu entfernen.

Der Motor 10 bleibt jedoch auch über die Bereitschaftsstellung hinaus in Tätigkeit, d. h. die Bereitschaftsstellung wird ohne eine Unterbrechung der Bewegung des Motors 10 durchfahren. Der Gleitstein 28 kommt dabei über den Übergangsbereich hinein in den achsparallelen Anfangsbereich 24 der Gleitbahn 23, so dass das obere Verschlussstück 7 aus der Bereitschaftsstellung in die Brühstellung in einer rein axialen Absenkbewegung mit seiner Dichtung in den Rohrabschnitt 4 eingefahren wird. Es wird die Brühstellung für das obere Verschlussstück 7 erreicht, wie dies Fig. 1 erkennen lässt. Gleichzeitig legt sich der Anschlag 30 auf dem Gegenanschlag 31 auf. Die Brühstellung ist erreicht. Es wird nun der Motor 33 des Vertikalantriebes für das untere Verschlussstück 8 in Tätigkeit gesetzt, und es erfolgt ein Anheben des unteren Verschlussstückes 8, welches so weit nach oben fährt, dass das Kaffeepulver im Brühraum 6 zu einer Tablette verdichtet wird. Dabei presst das untere Verschlussstück 8 gegen das feststehende obere Verschlussstück 7. Nach diesem Pressvorgang kann sich vorteilhaft ein Entlastungsvorgang für die Tablette anschließen, d. h. die Drehrichtung des Motors 33 wird umgekehrt. Es versteht sich, dass der Weg, den das untere Verschlussstück 8 wieder nach unten zurückfährt, entsprechend gering bemessen ist. Nun kann der eigentliche Brühvorgang ablaufen, d. h. die Steuereinheit öffnet ein entsprechendes Ventil und setzt eine Pumpe für Heißwasser in Gang, so dass die entsprechende Menge Heißwassers durch das obere Verschlussstück 7, die gepresste Tablette aus Kaffeepulver und durch das untere Verschlussstück 8 hindurchgepresst wird, so dass das fertige Kaffeegetränk am Kaffeeauslauf in eine Tasse oder ein Kännchen oder einen sonstigen Behälter abgegeben wird. Damit ist der Brühvorgang beendet, und das obere Verschlussstück 7 kann aus der Brühstellung in die Bereitschaftsstellung und weiter in die Parkstellung zurückgeführt werden. Zu diesem Zweck wird der Motor 10 in seiner anderen Drehrichtung in Gang gesetzt, wodurch der Gleitstein 28 zunächst wieder in dem achsparallelen Anfangsbereich 24 der Gleitbahn 23 arbeitet, so dass das obere Verschlussstück 7 aus der Brühstellung in die Bereitschaftsstellung axial nach oben angehoben wird. Die Bereitschaftsstellung wird durchfahren und der Gleitstein 28 gelangt in den steigenden Bereich 25 der Gleitbahn 23, wodurch einerseits die Verschwenkung des Dreharms 29 mit dem oberen Verschlussstück 7 aus der Bereitschaftsstellung in die Parkstellung ermöglicht wird. Andererseits wird auch der Schwenkabstreifer 32, der mit dem Führungsring 17 verbunden ist, ebenfalls in Uhrzeigerrichtung (Fig. 3) verschwenkt, wobei dieser über die Oberfläche des Gehäuses 2 hinwegschwenkt. In Abstimmung zu diesem Schwenkvorgang wurde auch der Motor 33 für das untere Verschlussstück 8 in Tätigkeit gesetzt und durch einen axialen Hebevorgang im Rohrabschnitt 4 die ausgelaugte Tablette aus Kaffeepulver so weit nach oben über die Oberfläche des Gehäuses 1 angehoben, dass diese Tablette von dem Schwenkabstreifer 32 bei der Rückbewegung des Dreharms 29 erfasst und seitlich in einen Aufnahmebehälter für ausgelaugte Kaffeepulvertabletten abgeworfen wird. Sobald die Tablette abgeworfen ist, wird der Motor 33 wiederum in umgekehrter Drehrichtung angetrieben, um die untere Stellung gemäß Fig. 1 zu erreichen. Gleichzeitig erreicht das obere Verschlussstück 7 die Parkstellung über dem Ablauftrichter und der Dusch-Reinigungsvorgang kann ablaufen. Der Trichter 37 steht über dem Brühraum 6 und leitet zu Beginn eines weiteren Brühzyklus frisch gemahlenes Kaffeepulver in den Brühraum.

### BEZUGSZEICHENLISTE

- 1: Kaffeemaschinenautomat
- 2: Gehäuse
- 3: Bohrung
- 4: Rohrabschnitt
- 5: Brühvorrichtung
- 6: Brühraum
- 7: oberes Verschlussstück
- 8: unteren Verschlussstück
- 9: Achse
- 10: Motor
- 11: Übersetzungsgetriebe
- 12: Spindel
- 13: Achse
- 14: Doppelpfeil
- 15: Schwenksäule
- 16: Verteilergetriebe
- 17: Führungsring
- 18: Mutter
- 19: Bohrung
- 20: Unrundverbindung

- 21: Abflachung
- 22: Doppelpfeil
- 23: Gleitbahn
- 24: achsparalleler Anfangsbereich
- 25: steigender Bereich
- 26: Bereich
- 27: Abdeckblech
- 28: Gleitstein
- 29: Dreharm
- 30: Anschlag
- 31: Gegenanschlag
- 32: Schwenkabstreifer
- 33: Motor
- 34: Lagerplatte
- 35: Lagerplatte
- 36: Spindel
- 37: Trichter
- 38: Übersetzungsgetriebe
- 39: Mutter
- 40: Zahnriemen

- 41: Zahnriemen
- 42: Ritzel
- 43: Ritzel

## Patentansprüche

1. Kaffeemaschinenautomat, insbesondere für Einzeltassen- und Kännchenfertigung, mit einem Gehäuse (1), mit mindestens einer Einrichtung zur Zufuhr von Kaffeepulver, mit einer Brühvorrichtung (5), die einen aus einem stationär mit vertikaler Achse (9) angeordneten Rohrabschnitt (4) sowie zwei Verschlussstücken (7, 8) gebildeten Brühraum (6) aufweist, mit einem kombinierten Axial- und Schwenkantrieb mit einem Motor (10), einem nachgeschalteten Getriebe (11) und einer axial beweglichen und drehbaren Schwenksäule (15) für die Bewegung des oberen, fest an einem Dreharm (29) angeordneten Verschlussstücks (7) in eine Brühstellung in den Rohrabschnitt (4) hinein und aus diesem heraus, für die Bewegung des oberen Verschlussstücks (7) in eine Parkstellung außerhalb der Achse (9) des Rohrabschnitts (4) und in eine Bereitschaftsstellung in der Achse (9) des Rohrabschnitts, mit einem einen weiteren Motor (33), ein weiteres nachgeschaltetes Getriebe (38) und eine axial bewegliche Spindel (36) aufweisenden Vertikalantrieb für das untere Verschlussstück (8), und mit einem angetriebenen Schwenkabstreifer (32) für die Abfuhr der Tablette aus Kaffeepulver, **dadurch gekennzeichnet, dass** die Schwenksäule (15) des kombinierten Axial- und Schwenkantriebs des Dreharms (29) mit dem oberen Verschlussstück (7) eine Gleitbahn (23) mit einem achsparallelen Anfangsbereich (24) für das Überführen des oberen Verschlussstücks (7) aus der Brühstellung in die Bereitschaftsstellung und einen gewindeartig steigenden Bereich (25) für das Verschwenken des Dreharms (29) mit dem oberen Verschlussstück (7) aus der Bereitschaftsstellung in die Parkstellung aufweist, und dass ein in die Gleitbahn (23) eingreifender Gleitstein (28) ortsfest am Gehäuse (2) vorgesehen ist.

2. Kaffeemaschinenautomat nach Anspruch 1, **dadurch gekennzeichnet, dass** für den kombinierten Axial- und Schwenkantrieb des Dreharms (29) mit dem oberen Verschlussstück (7) sowie den angetriebenen Schwenkabstreifer (32) ein erster Motor (10) mit seiner Achse unabhängig von dem Vertikalantrieb für das untere Verschlussstück (8), insbesondere oberhalb eines ersten Übersetzungsgetriebes (11), parallel und beabstandet zu der Achse (13) des Dreharms (29), vorgesehen ist.

3. Kaffeemaschinenautomat nach Anspruch 1 oder 2, **dadurch gekennzeichnet, dass** für den Vertikalantrieb für das untere Verschlussstück (8) ein zweiter Motor (33) unabhängig von dem ersten Motor (10), insbesondere mit seiner Achse oberhalb eines zweiten Übersetzungsgetriebes (38), parallel und beabstandet zu der Achse (9) des Brühraums (6), vorgesehen ist.

4. Kaffeemaschinenautomat nach mindestens einem der Ansprüche 1 bis 3, **dadurch gekennzeichnet, dass** das dem ersten Motor (10) und/oder dem zweiten Motor (33) nachgeordnete Übersetzungsgetriebe (11, 38) einen Zahnriemen, einen Keilriemen oder eine Zahnradstufe aufweist.

5. Kaffeemaschinenautomat nach einem der Ansprüche 1 bis 4, **dadurch gekennzeichnet, dass** im oberen Bereich der Schwenksäule (15) ein Führungsring (17) drehbar, aber axial unverschieblich gelagert ist, der mit der Schwenksäule (15) drehfest, aber axial verschieblich gekoppelt ist, und dass der Schwenkabstreifer (32) für die Abfuhr der Tablette aus Kaffeepulver und/oder ein Trichter (37) für das Einbringen des Kaffeepulvers in den Brühraum (6) mit dem Führungsring (17) drehfest verbunden sind.

6. Kaffeemaschinenautomat nach Anspruch 5, **dadurch gekennzeichnet, dass** zwischen der Schwenksäule (15) und dem Führungsring (17) eine Unrundverbindung (20) vorgesehen ist.

7. Kaffeemaschinenautomat nach Anspruch 6 **dadurch gekennzeichnet, dass** die Unrundverbindung (20) aus einer axial durchgehenden Abflachung (21) an der Schwenksäule (15) und einem Gegenvorsprung an dem Führungsring (17) besteht.

8. Kaffeemaschinenautomat nach einem der Ansprüche 1 bis 7, **dadurch gekennzeichnet, dass** der Dreharm (29) auf der dem oberen Verschlussstück (7) abgekehrten Seite über die Schwenksäule (15) hinaus verlängert ist und einen Anschlag (30) aufweist, dass am Gehäuse (2) ein dem Anschlag (30) zugeordneter Gegenanschlag (31) vorgesehen ist, an dem sich der Anschlag (30) des Dreharms (29) in der Brühstellung des oberen Verschlussstücks (7) abstützt.

9. Kaffeemaschinenautomat nach Anspruch 2 oder 3, **dadurch gekennzeichnet, dass** der erste und der zweite Motor (10, 33) für den Antrieb der Schwenksäule (15) bzw. des unteren Verschlussstücks (8) Elektromotoren, insbesondere Gleichstrommotoren, sind.

10. Kaffeemaschinenautomat nach einem der Ansprüche 1 bis 9, **dadurch gekennzeichnet, dass** die Gleitbahn (23) in der Schwenksäule (15) einen achsparallelen Endabschnitt (26) aufweist.

## Claims

1. An automated coffee machine, especially for providing single cups of coffee or small jugs of coffee, comprising a housing (2), at least a unit for feeding coffee powder, a brewing unit (5), the brewing unit including a stationary arranged tube section (4) having a vertical axis (9) and two locking elements (7, 8) forming a brewing chamber (6), a combined axial and rotational drive including a motor (10) and a transmission (11) being arranged downstream of the motor, and a pivot column (15) for the movement of the upper locking element (7) fixedly connected with a rotary arm (29) into a brewing position in the tube section (4) and out of it, for the movement of the upper locking element (7) in a parking position outside the axis (9) of the tube section (4) and into a stand-by position in the axis (9) of the tube section, a further motor (33), a further transmission (38) being arranged downstream the motor, and a vertical drive for the lower locking element (8) including an axially movable spindle (36), and a pivoted coffee removing element (32) to remove the tablet of coffee powder, **characterized in that** the pivot column (15) of the combined axial and rotational drive of the rotary arm (29) with the upper locking element (7) includes a sliding path (23), the sliding path including a first portion (24) which is parallel to the axis to move the upper locking element (7) from the brewing position in the stand-by position and including a second portion (25) which extends about at least a part of the circumference of the pivot column in a way similar to a thread for the pivoted movement of the rotary arm (29) with the upper locking element (7) from the stand-by position in the parking position, and **in that** a sliding block (28) is provided, the sliding block being fixedly connected to the housing (2) and extending into the sliding path (23).

2. The automated coffee machine of claim 1, **characterized in that** a first motor (10) is arranged with its axis independent from the vertical drive for the lower locking element (8) to form the combined axial and rotational drive of the rotary arm (29) with the upper locking element (7) and of the driven pivoted coffee removing element (32), especially above the first transmission (11), the first motor being arranged to be parallel and spaced apart from the axis (13) of the rotary arm (29).

3. The automated coffee machine of claim 1 or 2, **characterized in that** a second motor (33) is arranged independent from the first motor (10) to be parallel and spaced apart from the axis (9) of the brewing chamber (6) to form the vertical drive of the lower locking element (8), especially the second motor (33) with its axis being arranged above the second transmission (38).

4. The automated coffee machine of at least one of the claims 1 to 3, **characterized in that** the transmission (11, 38) being arranged downstream the first motor (10) and/or the second motor (33) includes at least one element selected from the group consisting of a toothed belt, a V-belt and two engaging gear wheels.

5. The automated coffee machine of one of the claims 1 to 4, **characterized in that** in the upper region of the pivot column (15) a guiding ring (17) is positioned, the guiding ring being arranged in the housing to be rotatable but not to be movable in an axial direction with respect to the housing, the guiding ring being connected to the pivot column (15) in a way to be commonly rotated with the pivot column but axially movable.

6. The automated coffee machine of claim 5, **characterized in that** a non-circular connection unit (20) is arranged between the pivot column (15) and the guiding ring (17).

7. The automated coffee machine of claim 6, **characterized in that** the non-circular connection unit (20) includes a flattened portion (21) and a counter stop, the flattened portion being located at the pivot column (15), the counter stop being located at the guiding ring (17).

8. The automated coffee machine of one of the claims 1 to 7, **characterized in that** the rotary arm (29) at its side facing away from the upper locking element (7) is enlarged to protrude beyond the pivot column (15) and includes a stop (30), and **in that** the housing (2) includes a counter stop (31), the counter stop being associated with the stop, the stop (30) being designed and arranged to contact the counter stop of the rotary arm (29) in the brewing position.

9. The automated coffee machine of claim 2 or 3, **characterized in that** the first and second motor (10, 33) to drive the pivot column (15) or the lower locking element (8) are designed as electric motors, especially as direct current electric motors.

10. The automated coffee machine of one of the claims 1 to 9, **characterized in that** the sliding path (23) of the pivot column (15) includes an end portion (26), the end portion being designed and arranged to be parallel to the axis of the pivot column.

## Revendications

1. Machine à café automatique, en particulier pour des tasses individuelles et une petite cafetière, avec un boîtier (1), avec au moins un dispositif d'admission de la mouture de café, avec un dispositif d'infusion (5) qui comporte une chambre d'infusion (6) formée par une partie tubulaire (4) stationnaire avec un axe vertical (9), ainsi que par deux obturateurs (7, 8), avec un système d'entraînement combiné à mouvement axial et pivotement avec un moteur (10), un engrenage (11) monté en aval et une colonne pivotante (15) mobile dans le sens axial et rotative pour déplacer l'obturateur supérieur (7), agencé de manière fixe sur un bras rotatif (29), dans une position d'infusion à l'intérieur de la partie tubulaire (4) et hors de celle-ci, pour déplacer l'obturateur supérieur (7) dans une position de repos hors de l'axe (9) de la partie tubulaire (4) et dans une position d'attente dans l'axe (9) de la partie tubulaire (4), avec un système d'entraînement vertical pour l'obturateur inférieur (8), comportant un autre moteur (33), un autre engrenage (38) monté en aval et une broche (36) mobile dans le sens axial, et avec une raclette pivotante (32) actionnée pour l'évacuation de la tablette de mouture de café, **caractérisée en ce que** la colonne pivotante (15) du système d'entraînement combiné à mouvement axial et pivotement du bras rotatif (29) avec l'obturateur supérieur (7) comporte une voie de glissement (23) avec une zone initiale (24) parallèle à l'axe, pour déplacer l'obturateur supérieur (7) hors de la position d'infusion dans la position d'attente, et une zone (25) à pente hélicoïdale pour le pivotement du bras rotatif (29) avec l'obturateur supérieur (7) hors de la position d'attente dans la position de repos, et **en ce qu'**il est prévu un coulisseau (28), fixe sur le boîtier (2) et entrant en prise avec la voie de glissement (23).

2. Machine à café automatique selon la revendication 1, **caractérisée en ce que** pour le système d'entraînement combiné à mouvement axial et pivotement du bras rotatif (29) avec l'obturateur supérieur (7), ainsi que pour la raclette pivotante (32) actionnée, il est prévu un premier moteur (10), dont l'axe est, en particulier au-dessus d'une première transmission (11), parallèle et écarté de l'axe (13) du bras rotatif (29), indépendamment du système d'entraînement vertical pour l'obturateur inférieur (8).

3. Machine à café automatique selon la revendication 1 ou 2, **caractérisée en ce que**, pour le système d'entraînement vertical de l'obturateur inférieur (8), il est prévu un deuxième moteur (33) indépendant du premier moteur (10), en particulier avec son axe au-dessus d'une deuxième transmission (38), parallèle et écarté de l'axe (9) de la chambre d'infusion (6).

4. Machine à café automatique selon au moins l'une des revendications 1 à 3, **caractérisée en ce que** la transmission (11, 38), montée en aval du premier moteur (10) et/ou du deuxième moteur (33), comporte une courroie dentée, une courroie trapézoïdale ou un étage à roue dentée.

5. Machine à café automatique selon l'une quelconque des revendications 1 à 4, **caractérisée en ce que** dans la partie supérieure de la colonne pivotante (15) est montée une bague de guidage (17) rotative, mais immobile dans le sens axial, laquelle est couplée à la colonne pivotante (15) de manière immobile en rotation, mais mobile dans le sens axial, et **en ce que** la raclette pivotante (32) pour l'évacuation de la tablette de mouture de café et/ou un entonnoir (37) pour introduire la mouture de café dans la chambre d'infusion (6) sont assemblés de manière solidaire en rotation avec la bague de guidage (17).

6. Machine à café automatique selon la revendication 5, **caractérisée en ce qu'**il est prévu une liason non circulaire (20) entre la colonne pivotante (15) et la bague de guidage (17).

7. Machine à café automatique selon la revendication 6, **caractérisée en ce que** l'assemblage excentrique (20) est formé par un méplat (21) continu dans le sens axial sur la colonne pivotante (15) et une saillie complémentaire sur la bague de guidage (17).

8. Machine à café automatique selon l'une quelconque des revendications 1 à 7, **caractérisée en ce que** le bras rotatif (29) est prolongé au-delà de la colonne pivotante (15), sur le côté détourné de l'obturateur supérieur (7), et comporte une butée (30), **en ce que** sur le boîtier (2) est prévue une contre-butée (31), qui est associée à la butée (30) et sur laquelle prend appui la butée (30) du bras rotatif (29) dans la position d'infusion de l'obturateur supérieur (7).

9. Machine à café automatique selon la revendication 2 ou 3, **caractérisée en ce que** le premier et le deuxième moteur (10, 33) pour l'entraînement de la colonne pivotante (15) et de l'obturateur inférieur (8) sont des moteurs électriques, en particulier des moteurs à courant continu.

10. Machine à café automatique selon l'une quelconque des revendications 1 à 9, **caractérisée en ce que** la voie de glissement (23) dans la colonne pivotante (15) comporte une partie finale (26) parallèle à l'axe.
